Europäisches Patentamt

European Patent Office

Office européen des brevets

(11) Veröffentlichungsnummer: **0 444 430 A2**

## (12) EUROPÄISCHE PATENTANMELDUNG

(21) Anmeldenummer: 91101408.2

(22) Anmeldetag: 02.02.91

(51) Int. Cl.5: **B23Q 16/00**, F16B 4/00

(30) Priorität: 02.03.90 DE 4006477

(43) Veröffentlichungstag der Anmeldung:
04.09.91 Patentblatt 91/36

(84) Benannte Vertragsstaaten:
DE ES FR GB IT

(71) Anmelder: AUDI AG
Postfach 2 20
W-8070 Ingolstadt(DE)

(72) Erfinder: Motzet, Josef
Etrichstrasse 21
W-8070 Ingolstadt(DE)
Erfinder: Sprehe, Harald
Haunwöhrerstrasse 123
W-8070 Ingolstadt(DE)
Erfinder: Stemmer, Xaver
Hölderlinstrasse 18
W-8077 Reichertshofen(DE)

(54) Vorrichtung zum Positionieren zweier Bauteile zueinander.

(57) Bei einer Vorrichtung zum in Umfangsrichtung genauen Positionieren zweier Bauteile zueinander, wobei das eine Bauteil eine Ausnehmung mit zumindest einer inneren Referenzfläche und das andere Bauteil zumindest eine korrespondierende Referenzfläche am Außenumfang aufweist und die Bauteile relativ zueinander steckbar sind, sind zur Erzielung einer spielfreien Verbindung bei herstellungstechnisch geringem Aufwand zwischen den Bauteilen nur ein oder mehrere Punkt- oder Linienberührungen vorgesehen. Bevorzugt kann der Außenumfang des Bauteiles zylindrisch mit einer Abflachung als Referenzfläche und die Ausnehmung des anderen Bauteiles polygonförmig ausgebildet sein.

FIG.1

EP 0 444 430 A2

Die Erfindung betrifft eine Vorrichtung zum in Umfangsrichtung genauen Positionieren zweier Bauteile zueinander, gemäß dem Oberbegriff des Patentanspruches 1.

Eine gattungsgemäße Vorrichtung kann z. B. zum phasenrichtigen Einstellen einer Welle zu einem Gehäuse verwendet sein. Auf eine Abflachung der Welle wird in Umfangsrichtung formschlüssig eine mit einer Ausnehmung versehene Einstellplatte aufgesteckt, die dann als Referenz für ein Einstellwerkzeug dienen kann. Dabei ist wichtig, daß die Einstellplatte bei geringem herstellungstechnischem Aufwand spielfrei auf der Welle sitzt, um die Einstelltoleranzen weitgehendst einzuengen.

Aufgabe der Erfindung ist es, eine Vorrichtung der gattungsgemäßen Art vorzuschlagen, die bei geringem herstellungstechnischem Aufwand eine spielfreie Steckverbindung sicherstellt.

Diese Aufgabe wird erfindungsgemäß mit den kennzeichnenden Merkmalen des Patentanspruches 1 gelöst. Vorteilhafte und zweckmäßige Weiterbildungen der Erfindung sind den weiteren Patentansprüchen entnehmbar.

Erfindungsgemäß wird also vorgeschlagen, die steckbaren Bauteile mit Ausnahme der Referenzflächen so auszubilden, daß zwischen den Bauteilen nur eine Punkt- oder Linienberührung vorliegt; die Bauteile können dadurch maßlich auf Spielfreiheit festgelegt werden, wobei im Falle einer Überdeckung lediglich in den Punkt- oder Linienbereich aufgrund der hohen spezifischen Flächenpressung eine Materialverquetschung bzw. -verlagerung auftritt. Die Bauteile können mit relativ geringer Steckkraft zusammengesteckt werden, wobei in jedem Falle eine Spielfreiheit bzw. ein spielfreies Anliegen der Referenzflächen aneinander gewährleistet ist.

Eine Linienberührung gemäß der Lehre der vorliegenden Erfindung wird besonders einfach erzielt, wenn gemäß Patentanspruch 2 das eine Bauteil zumindest im Steckbereich zylindrisch mit einer Abflachung als Referenzfläche und das andere Bauteil bzw. dessen Ausnehmung polygonförmig ausgebildet ist.

Besonders zweckmäßig kann die Ausnehmung in dem einen Bauteil entsprechend den Merkmalen der Patentansprüche 3 bis 6 gestaltet sein, insbesondere wenn das Bauteil aus einem Flachmaterial hergestellt ist. Durch die konische Ausbildung der Ausnehmung, die gemäß Anspruch 6 durch den Stanzauswurf beim Stanzen bewerkstelligt sein kann, wird das Aufstecken des Bauteiles auf den zylindrischen Abschnitt des anderen Bauteiles vereinfacht. Ferner wird die zwischen dem zylindrische Außenumfang des einen Bauteiles und der Ausnehmung vorliegende Linienberührung gegebenenfalls bis auf eine Punktberührung verkürzt.

Die vorgeschlagene Linien- oder Punktberührung kann jedoch abweichend von den vorgeschlagenen Maßnahmen auch durch Vorsprünge in der Ausnehmung oder am Außenumfang des Bauteiles gebildet sein. Die Vorsprünge können insbesondere bei einem plattenförmigen Teil auch durch Anstauchen der die Ausnehmung umschließenden Materialbereiche erzeugt werden.

Zwei Ausführungsbeispiele der Erfindung sind im folgenden mit weiteren Einzelheiten näher erläutert. Die beiliegende Zeichnung zeigt in

Fig. 1 eine Draufsicht auf eine Vorrichtung zum in Umfangsrichtung genauen Positionieren einer Einstellplatte relativ zu einer Welle;

Fig. 2 einen Schnitt gemäß Linie II-II der Fig. 1 durch die Vorrichtung;

Fig. 3 eine weitere Vorrichtung mit einer Vierkantwelle und einer Einstellplatte mit einem angestauchtem Vorsprung.

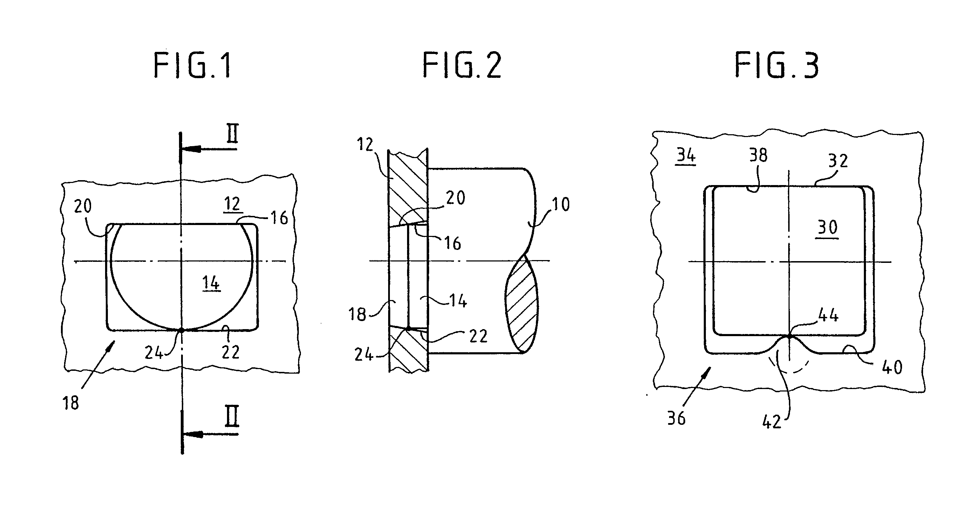

Bei der in den Figuren 1 und 2 dargestellten Vorrichtung ist das eine Bauteil eine Welle 10, auf der eine Einstellplatte 12 als weiteres Bauteil in Umfangsrichtung formschlüssig und lagegenau positioniert werden soll. Die Einstellplatte 12 dient beispielsweise dazu, in Verbindung mit einem nicht dargestellten Einstellwerkzeug die Welle 10 zu einem nicht dargestellten Gehäuse phasenrichtig bzw. in einer definierten Position festzulegen.

Die Welle 10 weist einen im Durchmesser verringerten Absatz 14 auf, der mit einer Abflachung 16 als Referenzfläche versehen ist.

Die Einstellplatte 12 besitzt eine polygonförmige bzw. rechteckförmige Ausnehmung 18, die eine zu der Referenzfläche 16 korrespondierende Referenzfläche 20 hat. Die der Referenzfläche 20 gegenüberliegende Fläche 22 ist maßlich so bestimmt, daß sie spielfrei die Referenzflächen 16,20 beim Aufstecken der Einstellplatte 12 in Kontakt hält, wodurch bei 24 eine Linienberührung zwischen der Fläche 22 und dem zylindrischen Außenumfang des Absatzes 14 vorliegt. Weitere Linienberührungen könnten auch in der waagrechten Mittelachse (Mittellinie) vorgesehen sein.

Die Ausnehmung 18 in der Einstellplatte 12 ist durch Stanzen mit einem entsprechenden Stanzwerkzeug hergestellt, wobei durch den dabei auftretenden Stanzauswurf die Ausnehmung 18 leicht konisch ausgebildet ist (vgl. Fig.2, übertrieben dargestellt). Die Stanzrichtung ist dabei gleich der Aufsteckrichtung der Einstellplatte 12 auf die Welle 10. Durch die konische Gestaltung der Ausnehmung 18 liegt zwischen der Fläche 22 und dem korrespondierenden Außenumfang des zylindrischen Absatzes 14 der Welle 10 bei 24 nur eine Punktberührung vor, die jedoch ausreicht, um die Referenzflächen 16,20 spielfrei aneinander zu halten.

Durch diese Maßnahme können der zylindrische Absatz 14 der Welle mit der Abflachung 16 und die Ausnehmung 18 in der Einstellplatte 12 maßlich unter Zulassung üblicher Toleranzen so hergestellt werden, daß entweder Spielfreiheit oder aber eine Überdeckung bei 24 vorliegt. Durch das Aufstecken der Einstellplatte 12 wird in dem Linien- oder Punktberührungsbereich (bei 24) das Material aufgrund der hohen spezifischen Flächenpressung entsprechend verquetscht oder verformt, so daß beispielsweise trotz einer Überdeckung ein Aufstecken mit relativ geringen Kräften möglich ist. Die Einstellplatte 12 kann durch eine in die Welle 10 eingeschraubte Befestigungsschraube gehalten sein.

In der Fig. 3 ist in der Draufsicht eine Vierkantwelle 30 gezeigt, die eine Referenzfläche 32 aufweist. In der auf die Vierkantwelle 30 aufgesteckten Einstellplatte 34 ist eine quadratische Ausnehmung 36 eingestanzt. Die der korrespondierenden Referenzfläche 38 der Ausnehmung 36 gegenüberliegende Fläche 40, die gegenüber der Vierkantwelle ein großzügiges Spiel aufweist, ist mit einem angestauchten Vorsprung 42 versehen, der bei 44 eine Punktberührung ähnlich der Punktberührung bei 24 in den Figuren 1 und 2 erzeugt.

Durch diese Punktberührung bei 44 ist wiederum ein spielfreies Anliegen zwischen den Referenzflächen 32,38 gewährleistet, so daß die Einstellplatte 34 auf der Vierkantwelle 30 in Umfangsrichtung genau positioniert ist. Der Vorsprung ist maßlich so hergestellt, daß er eine Spielfreiheit gegebenenfalls mit Überdeckung sicherstellt, wobei beim Aufstecken der Einstellplatte 34 bei 44 entsprechend Material verquetscht oder verlagert wird.

Die Erfindung ist nicht auf die gezeigten Ausführungsbeispiele beschränkt. Beispielsweise kann anstelle der rechteckförmigen oder quadratischen Ausnehmung 18,36 auch eine dreieckförmige Ausnehmung oder jede andere polygonförmige Geometrie gewählt sein. Im Falle einer Vierkantwelle gemäß Fig. 3 könnte die Ausnehmung 36 teilweise auch rund ausgeführt sein, so daß die Linien- oder Punktberührung im Bereich der Ecken der Vierkantwelle erzeugt wird. Anstelle einer Referenzfläche je Bauteil können auch zwei in einem Winkel zueinander verlaufende Referenzflächen vorgesehen sein (z. B. pfeilförmig). Dies bewirkt zugleich auch eine laterale Zentrierung der Bauteile zueinander.

## Patentansprüche

1. Vorrichtung zum in Umfangsrichtung genauen Positionieren zweier Bauteile zueinander, wobei das eine Bauteil eine Ausnehmung mit zumindest einer inneren Referenzfläche und das andere Bauteil zumindest eine korrespondierende Referenzfläche am Außenumfang aufweist und die Bauteile relativ zueinander steckbar sind, **dadurch gekennzeichnet,** daß mit Ausnahme der Referenzflächen (16,20;32,38) zwischen den Bauteilen (12,14;30,34) nur ein oder mehrere Punkt- oder Linienberührungen (24;44) bestehen.

2. Vorrichtung nach Anspruch 1, **dadurch gekennzeichnet,** daß der Außenumfang des einen Bauteiles (14) zylindrisch mit einer Abflachung (16) als Referenzfläche und die Ausnehmung (18) des anderen Bauteiles (12) polygonförmig ausgebildet ist.

3. Vorrichtung nach den Ansprüchen 1 und 2, **dadurch gekennzeichnet,** daß die Ausnehmung (18) rechteckförmig ausgebildet ist, wobei die parallel zur Referenzfläche (20) liegende Fläche (22) maßlich mit Überdeckung ausgeführt ist.

4. Vorrichtung nach den Ansprüchen 1 bis 3, **dadurch gekennzeichnet,** daß zumindest die parallel zur Referenzfläche (20) liegende Fläche (22) der Ausnehmung (18) in Steckrichtung schräg ausgebildet ist.

5. Vorrichtung nach den Ansprüchen 1 bis 4, **dadurch gekennzeichnet,** daß die Ausnehmung (18) leicht konisch ausgebildet ist.

6. Vorrichtung nach den Ansprüchen 1 bis 5, **dadurch gekennzeichnet,** daß die Ausnehmung (18) in dem aus Flachmaterial bestehenden Bauteil (12) durch Stanzen hergestellt ist, wobei die Stanzrichtung gleich der Steckrichtung ist.

7. Vorrichtung nach einem oder mehreren der Ansprüche 1 bis 6, **dadurch gekennzeichnet,** daß an den Bauteilen zwei in einem Winkel zueinander angeordnete aneinander angrenzende Referenzflächen angeordnet sind.

8. Vorrichtung nach einem oder mehreren der vorhergehenden Ansprüche, **dadurch gekennzeichnet,** daß die Linien- oder Punktberührung durch Vorsprünge (42) in der Ausnehmung (36) oder am Außenumfang der Bauteile gebildet sind.

9. Vorrichtung nach Anspruch 8, **dadurch gekennzeichnet,** daß die Vorsprünge (42) durch Anstauchen der die Ausnehmung (36) umschließenden Materialbereiche erzeugt sind.

# FIG.1

# FIG.2

# FIG.3

EP 0 444 430 A2